# EUROPEAN PATENT APPLICATION

(11) **EP 1 919 201 A2**
(43) Date of publication of application: **07.05.2008**
(21) Application number: 07019433.7
(22) Date of filing: 04.10.2007
(51) Int. Cl.: H04N 5/44

(54) **Receiving apparatus and communication method**

(30) Priority: 31.10.2006 JP 2006296923
(71) Applicant: Kabushiki Kaisha Toshiba, Minato-ku, Tokyo 105-8001 (JP)
(72) Inventor: Kakubashi, Takahiro Toshiba Corporation, Tokyo 105-8001 (JP)
(74) Representative: HOFFMANN EITLE

(57) **Abstract**

A receiving apparatus (10) includes a tuner unit (12, 13) which receives a broadcast signal and outputs a video/audio signal based on regional information, an HDMI terminal (20) connected to an external device (40) through an HDMI cable, and a management unit (30) which receives a command by HDMI-CEC communication with the external device through the HDMI terminal thereby to acquire and manage the regional information.

## Description

The present invention relates to a receiving apparatus for executing a receiving process based on regional information acquired using an HDMI-CEC communication protocol and a communication method thereof.

With the recent development of the digital technologies, the technique for receiving digital broadcast, etc., has been developed and a receiver therefor has come to be widely used. In this receiver, the image quality, sound quality, language and channel of an audio/video signal for a particular region can be set by use of a regional code as the regional information for receiving the broadcast.

In a system described in Patent Document 1 (Jpn. Pat. Appln. KOKAI Publication No. 2001-111503), a regional code corresponding to contents written by a transmitter is multiplexed and sent out as broadcast data, and a receiver receives a plurality of content data and the regional code transmitted thereto, and selects and outputs the content data corresponding to the regional code through audio/video output means. In this way, Patent Document 1 discloses a system capable of automatically selecting and receiving the broadcast having the appropriate contents in accordance with a receiving region.

The prior art described in Patent Document 1, however, poses the problem that the regional codes are limited to those acquired from the broadcast data and lacks the explanation about a case in which the regional code is acquired from the reproducing apparatus for an external recording medium using the communication based on the HDMI-CEC communication protocol.

An object of the invention is to provide a receiving apparatus utilizing the regional information acquired by the HDMI-CEC communication protocol and a communication method therefor.

One embodiment for achieving the object is a receiving apparatus comprising: a tuner unit (12, 13) which receives a broadcast signal and outputs a video/audio signal based on regional information; an HDMI terminal (20) connected to an external device (40) through an HDMI cable; and a management unit (30) which receives a command by HDMI-CEC communication with the external device through the HDMI terminal thereby to acquire and manage the regional information.

In the case where a user has moved his/her residence, for example, a DVD having stored therein a regional code is acquired from a service center and reproduced in a DVD player connected to a TV through an HDMI cable or the like. In this way, the regional code of the destination of movement can be easily set in the TV.

The invention can be more fully understood from the following detailed description when taken in conjunction with the accompanying drawings, in which:
FIG. 1 is a block diagram showing an example of a configuration of a broadcast receiving apparatus according to an embodiment of the invention;
FIG. 2 is a diagram for explaining an HDMI terminal arrangement of the broadcast receiving apparatus according to an embodiment of the invention;
FIG. 3 is a flowchart showing an example of an initialization process of the broadcast receiving apparatus according to an embodiment of the invention;
FIG. 4 is a flowchart showing an example of an HDMI-CEC communication protocol for the broadcast receiving apparatus according to an embodiment of the invention;
FIG. 5 is a diagram for explaining an example of a screen for setting an automatic switching function by detection of a regional code in the broadcast receiving apparatus according to an embodiment of the invention;
FIG. 6 is a diagram for explaining an example of a screen for checking a user at the time of change of the regional code in the broadcast receiving apparatus according to an embodiment of the invention; and
FIG. 7 is a diagram for explaining an example of definition of the regional code handled by the broadcast receiving apparatus according to an embodiment of the invention.

An embodiment of the invention will be explained in detail below with reference to the drawings.

### <Receiving apparatus according to an embodiment of the invention>

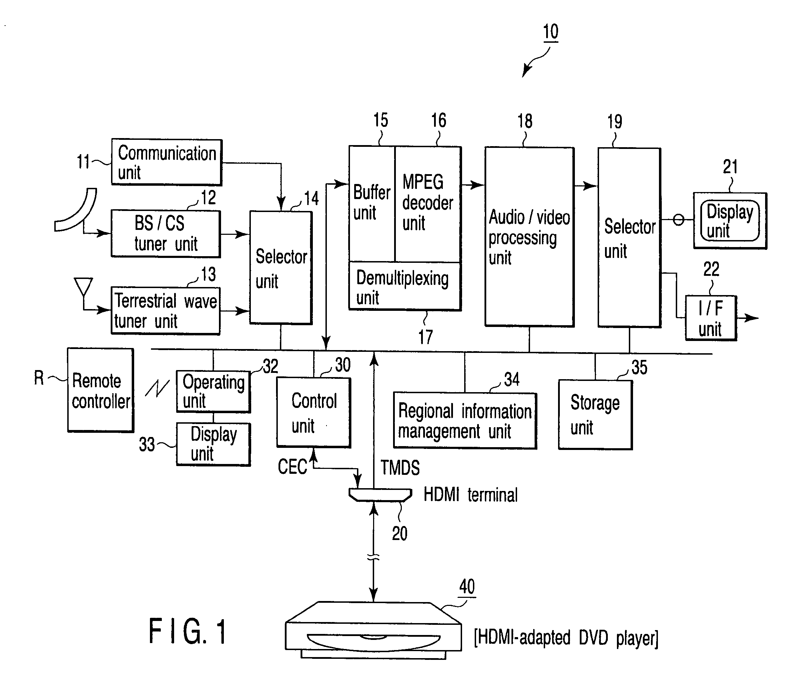

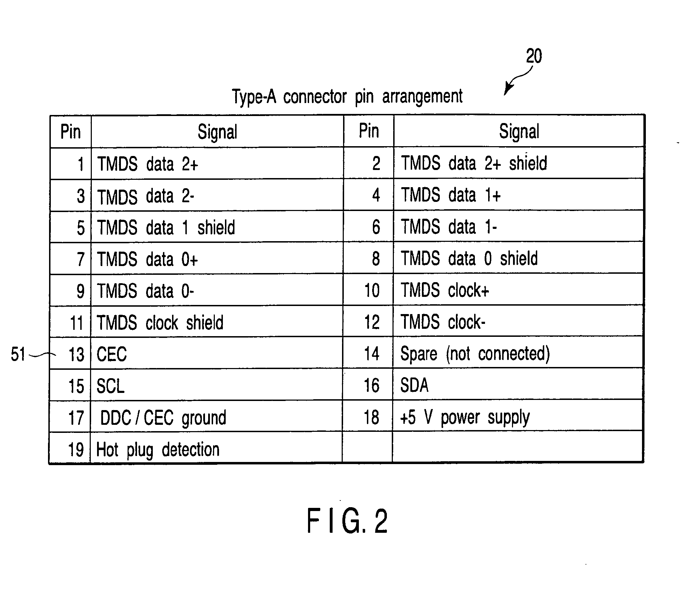

A receiving apparatus according to an embodiment of the invention and a reproducing apparatus for a recording medium connected to the receiving apparatus with an HDMI cable will be explained in detail below with reference to the drawings. FIG. 1 is a block diagram showing an example of a configuration of a broadcast receiving apparatus according to an embodiment of the invention. FIG. 2 is a diagram for explaining an HDMI terminal arrangement included in the broadcast receiving apparatus according to an embodiment of the invention.

### (Configuration and operation of receiving apparatus)

A receiving apparatus 10 shown in FIG. 1 is a TV system adapted for HDMI-CEC, and a control unit 30 is connected to each part through a data bus to control the operation of the whole circuit.

The receiving apparatus 10 shown in FIG. 1 includes, as main component elements, a MPEG decoder unit 16 making up a reproduction side and the control unit 30 for controlling the operation of the apparatus proper. The receiving apparatus 10 also includes an input-side selector 14 and an output-side selector 19. The input-side selector 14 is connected with a communication unit 11 having a mail function such as LAN, a so-called broadcast satellite (BS/CS) tuner unit 12, and a so-called terrestrial wave tuner unit 13. Also, the BS/CS tuner unit 12 is connected with a satellite antenna, and the terrestrial wave tuner unit 13 with a terrestrial wave antenna.

Further, the receiving apparatus 10 includes the MPEG decoder unit 16, a demultiplexing unit 17, a regional information management unit 34 described later, and a storage unit 35 for storing the regional information. These parts are connected to the control unit 30 through a data bus. Further, the output of the selector unit 19 is connected to a display unit 21, and through an interface unit 22 for communication with an external device, supplied to the external device.

Further, the receiving apparatus 10 includes an operating unit 32 connected to the control unit 30 through the data bus to receive the user operation and the operation of a remote controller R. The remote controller R is capable of the operation substantially equivalent to the operating unit 32 arranged on the receiving apparatus 10 proper and adapted to perform various setting operations such as the tuner operation. The receiving apparatus 10 has an HDMI terminal 20 connected to the control unit 30 and the data bus. The HDMI terminal 20, in cooperation with the control unit 30 and the regional information management unit 34, can conduct bidirectional communication with external devices in accordance with the HDMI-CEC communication protocol.

Also, the HDMI terminal 20 has connector pins arranged as shown in FIG. 2. Specifically, a command defined according to the HDMI-CEC protocol described later is transmitted/received by a CEC signal 51 of 13 pins, so that the regional information such as the regional code can be transmitted and received.

In the receiving apparatus 10 constituting an HDMI-CEC-adapted TV system, the broadcast signal is input to the tuner units 12, 13 from the receiving antenna for the tuning operation. The video/audio signal thus tuned is decoded through the MPEG decoder unit 16 and supplied to an audio/video processing unit 18. In a similar fashion, the MPEG decoder unit 16 and the audio/video processing unit 18 are supplied with the signals connected to the external device such as VTR or DVD by the HDMI terminal 20.

These input signals are controlled by the control unit 30 and switched to a signal to be input to the audio/video processing unit 18.

The operating signal from the remote controller R, on the other hand, is supplied to the control unit 30 through the operating unit 32 for tuning and input switching, thereby controlling the MPEG decoder unit 16 and the audio/video processing unit 18. The video signal processed in the audio/video processing unit 18 is displayed on the display unit 21 through the selector unit 19. Also, the audio signal is supplied to a speaker or the like not shown.

The regional information management unit 34, in cooperation with the control unit 30 as described later, manages the regional information such as the regional code acquired from the reproducing apparatus for an external recording medium through the HDMI terminal. As a result, the tuners 12, 13 can appropriately set the channel for the broadcast signal based on the regional code, and optimize at least one of the image quality, sound quality and language of the video/audio signal, thereby making the proper reproduction process possible.

### <Initialization process of regional code>

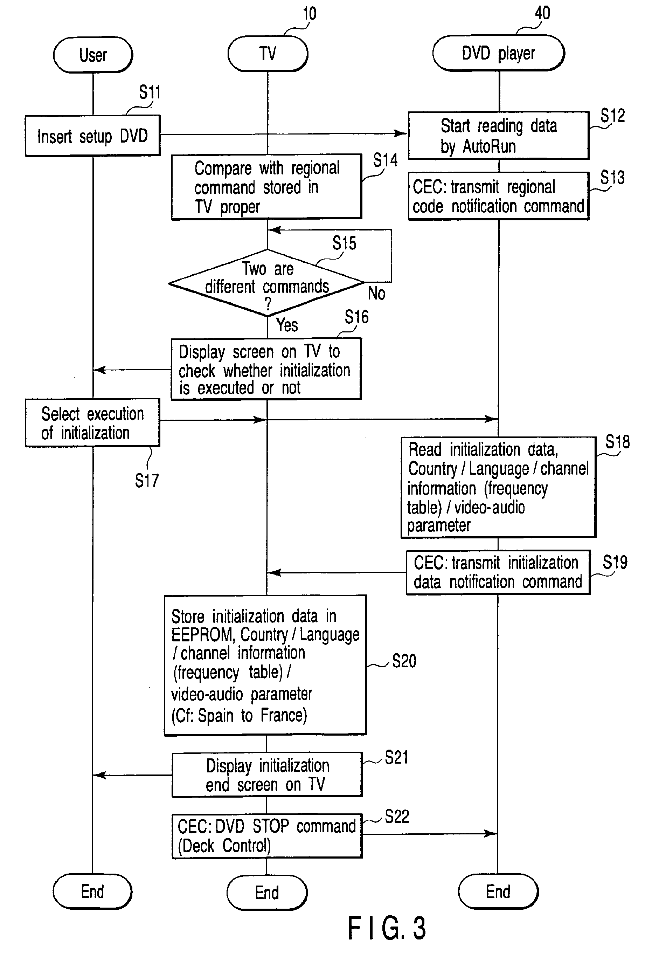

Next, the process of initializing the regional code of the broadcast receiving apparatus according to the invention will be explained in detail below with reference to flowcharts. FIG. 3 is a flowchart showing an example of the initialization process for the broadcast receiving apparatus according to an embodiment of the invention.

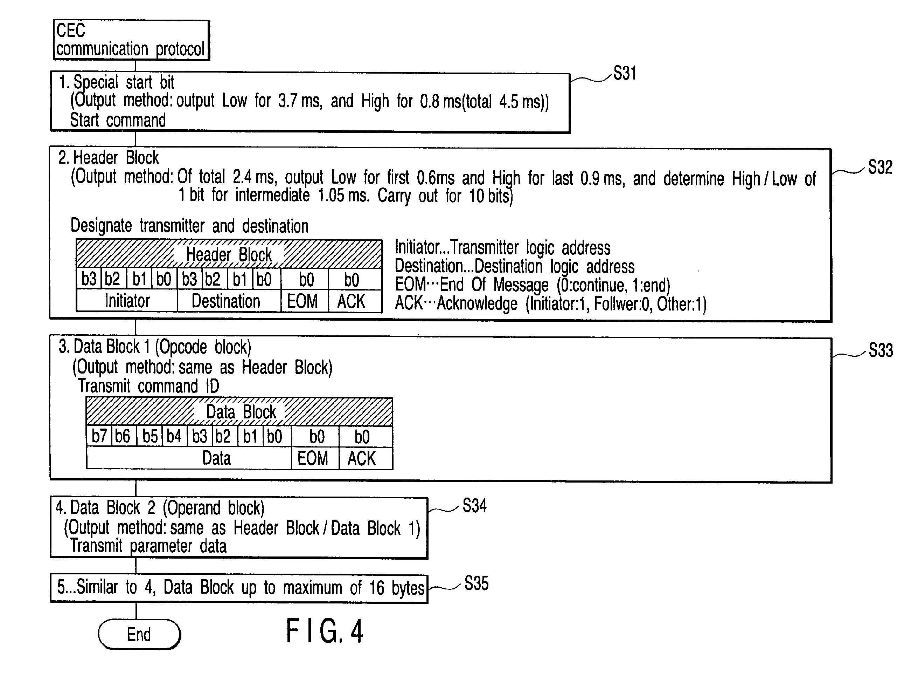

Each step of the flowcharts in FIGS. 3 and 4 described below can be replaced with a circuit block, and therefore, can be defined as a block.

The process of initializing the regional code between the receiving apparatus 10 and a reproducing apparatus 40 for a recording medium such as DVD connected to the receiving apparatus 10, including the user operation, will be explained in detail below with reference to the flowchart of FIG. 3.

As an example, assume that a user residing in Europe moves from Spain to France, and in the process, supplied with a DVD for initialization in France from a manufacturer or the like, efficiently executes the process of initializing the TV for application in France using this DVD.

First, the user inserts the setup (initialization) DVD supplied from the manufacturer into an HDMI-adapted DVD player 40. The HDMI-adapted DVD player 40 automatically detects the disk and starts to read the data (step S12). Also, the control unit 30 of the broadcast receiving apparatus 10 executes the process of authenticating the HDMI-adapted DVD player 40 constituting a device connected for HDMI.
Incidentally, although the destination of transmission is not specified in the HDMI-CEC communication in the embodiment described below, the transmission/receiving operation after identifying the address of the destination is also preferable. Upon determination that the destination is a legitimate device as the result of authentication, the control unit 30 transmits a command to read the regional code from the medium in the DVD, for example, using the HDMI-CEC communication.

### · CEC communication protocol

FIG. 4 is a flowchart showing an example of the HDMI-CEC communication protocol for the broadcast receiving apparatus according to an embodiment of the invention. The CEC communication protocol will be explained below with reference to the flowchart of FIG. 4.

The CEC communication, which is conducted using only the CEC terminal 51 described above, is started by the "Special Start Bit" method. The signal is output in low state for 3.7 ms and in high state for 0.8 ms (step S31).

Next, a header block is transmitted. The signal is output in low state only for the first 0.6 ms out of the total of 2.4 ms, and in high state for the last 0.9 ms while the high/low state is determined for 1 bit during the intermediate 1.05 ms. This process is executed for 10 bits (step S32).

Next, the data block of an opcode block is output in a similar manner to the header block (step S33). Then, the data block of an operand block is output in a similar manner to the header block (step S34). Like in step S34, the data block can be transmitted up to a maximum of 16 bytes (step S35).

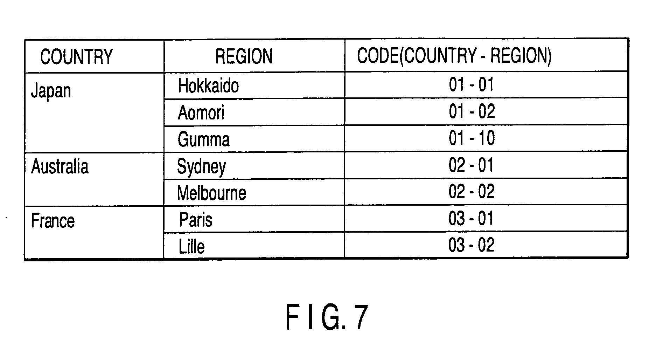

Incidentally, the regional code sent by this communication protocol preferably includes not only the name of a country but also a country setting and a more detailed region setting as shown in FIG. 7.

In the receiving apparatus 10, the control unit 30 and the regional information management unit 34 have such a function that the regional code sent in accordance with the CEC communication protocol by a regional code notification command is compared with the regional code stored in a storage unit 35 of the receiving apparatus 10 (step S14).

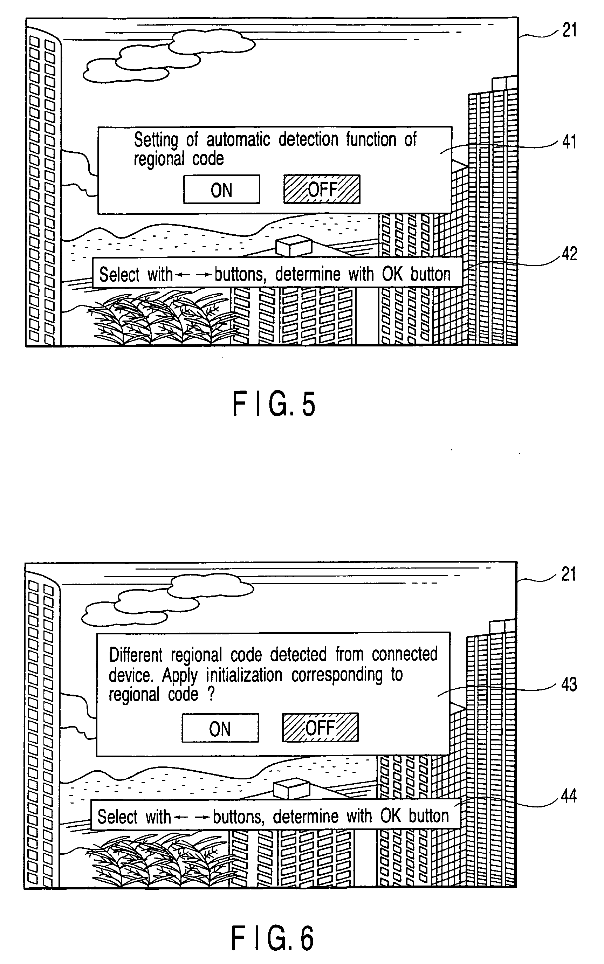

Upon determination by the control unit 30 and the regional information management unit 34 that the two are different from each other (step S15), a screen is displayed to make inquiry as to whether the process of updating the regional code to a new one is to be executed or not as shown in FIG. 6 (step S16).

Incidentally, a screen as shown in FIG. 5 to make inquiry as to the advisability of setting the automatic function of constantly detecting whether a new regional code is to be supplied or not is preferably displayed at predetermined time intervals or at the time of installing the receiving apparatus 10 thereby to prompt the user for an instruction.

In response to the screen making inquiry as to the advisability of updating the regional code in step S16, the user outputs, through the remote controller R or the like, an operation signal indicating the desire to update the regional code for initialization (step S17). Then, the receiving apparatus 10 sends an instruction signal to the DVD player 40 or the like, which in turn reads the regional code as the initialization data from the storage area of the DVD. Specific typical examples are the country information, language information, channel information (frequency table) and video/audio parameter, to which the invention is not limited.

The initialization data that has been read as a regional code is transmitted from the DVD player 40 to the receiving apparatus 10 by the HDMI-CEC communication in accordance with the HDMI-CEC communication protocol described above (step S19).

The receiving apparatus 10 stores the received initialization data in the storage unit 35, for example (step S20). The initialization data include the country information, language information, channel information (frequency table) and video/audio parameter. As a result, the receiving apparatus 10 is updated for initialization, as an example, for France in place of for Spain.

Upon complete initialization, the receiving apparatus 10 displays on the display unit 21 that the initialization has been updated for France from the initialization for Spain (step S21). Also, a DVD stop command is transmitted again by the HDMI-CEC communication to the DVD player 40 thereby to stop the operation of the DVD player 40.

As explained in detail above, in the receiving apparatus 10 having the HDMI-CEC communication function according to an embodiment of the invention and the DVD player 40, the user reproduces the medium with a regional code recorded in an external device such as the DVD connected by HDMI, so that the optimum video setting, audio setting, channel setting, etc. for TV can be carried out automatically for a particular region without the video setting, audio setting and channel setting by menu operation using the remote controller.

In the case where the user moves to another region, for example, the channel can be set easily without error by acquiring a setup disk for the particular region from a service center. Also, in the case where the user moves to a different country having the same broadcast system, the video parameter and the audio parameter adapted for the particular country can be set for an improved added value.

According to another embodiment, the regional information such as the regional code described above may preferably be a language for the text broadcast.

Furthermore, according to the embodiment described above, the regional information is updated using the HDMI-CEC communication protocol. Nevertheless, the scope of this invention is not limited to this application and the invention is of course applicable also to the communication with other signals with equal effect.

From the various embodiments described above, those skilled in the art can implement the present invention. Further, those skilled in the art can easily conceive of various modifications of the embodiments, and application to various embodiments thereof is possible for them without inventive ability. This invention, therefore, covers a wide scope without departing from the disclosed principle and novel features and is not limited to the embodiments described above.

## Claims

1. A receiving apparatus **characterized by** comprising:
a tuner unit (12, 13) which receives a broadcast signal and outputs a video/audio signal based on regional information;
an HDMI terminal (20) connected to an external device (40) through an HDMI cable; and
a management unit (30) which receives a command by HDMI-CEC communication with the external device through the HDMI terminal thereby to acquire and manage the regional information.

2. The receiving apparatus according to claim 1, **characterized by** further comprising:
a control unit (30) which sets a channel of the broadcast signal in the tuner unit and changes at least one of image quality, sound quality and language of the video/audio signal based on the regional information managed by the management unit.

3. The receiving apparatus according to claim 1, **characterized in that** communication data includes a header block and a data block in accordance with an HDMI-CEC communication protocol.

4. The receiving apparatus according to claim 1, **characterized in that** the management unit automatically updates by detecting a change in the regional information.

5. The receiving apparatus according to claim 1, **characterized in that** the management unit generates a screen (FIG. 5) for setting whether the regional information is automatically updated or not by detecting a change therein.

6. The receiving apparatus according to claim 1, **characterized in that** the management unit, upon detection of a change in the regional information, generates a screen (FIG. 6) for making an inquiry as to whether the regional information is to be updated or not.

7. The receiving apparatus according to claim 1, **characterized in that** the regional information includes country information and information on a region in the particular country (FIG. 7).

8. A communication method for transmitting predetermined information from a reproducing apparatus (40) for a recording medium to an external device (10) through an HDMI cable, **characterized by** comprising:
executing an authentication process between the reproducing apparatus_and the external device (10) through a HDMI terminal and the HDMI cable;
reading a region information stored in the recording medium in the reproducing apparatus; and
transmitting a command from the reproducing apparatus to the external device by HDMI-CEC communication through a CEC terminal of the HDMI terminal thereby to supply the external device with the predetermined information read from the recording medium.

9. A communication method according to claim 8,
**characterized in that**:
the external device receives a broadcast signal and outputs a video/audio signal based on the predetermined information acquired.
